# EUROPEAN PATENT SPECIFICATION

(11) **EP 2 268 963 B1**
(45) Date of publication and mention of the grant of the patent: **28.09.2011**
(21) Application number: 08867426.2
(22) Date of filing: 19.12.2008
(51) Int. Cl.: F17C 5/06, F17C 7/00

(54) **INTERNAL GAS WARMING FOR HIGH PRESSURE GAS STORAGE TANKS WITH METAL LINERS**
INTERNE GASERWÄRMUNG FÜR HOCHDRUCKGASTANKS MIT METALLAUSKLEIDUNG
RÉCHAUFFEMENT DE GAZ INTERNE DE RÉSERVOIRS DE STOCKAGE DE GAZ HAUTE PRESSION POURVUS DE REVÊTEMENTS MÉTALLIQUES

(30) Priority: 19.12.2007 US 959911
(43) Date of publication of application: 05.01.2011
(73) Proprietor: Honda Motor Co., Ltd., Minato-ku Tokyo 107-8556 (JP)
(72) Inventor: HANDA, Kiyoshi, Raymond, Ohio 43067-9705 (US)
(74) Representative: Beresford, Keith Denis Lewis
(86) International application number: PCT/IB2008/003972
(87) International publication number: WO 2009/083806

(56) References cited:
- EP-A2- 0 877 185
- EP-A2- 1 384 940
- US-A1- 2006 219 298
- US-A1- 2007 000 016
- US-A1- 2007 012 551
- US-A1- 2007 246 122
- US-A1- 2008 105 691

## Description

### FIELD OF THE INVENTION

The present invention relates to a warming system for high pressure storage tanks for hydrogen and CNG gas fuel. Thermal and mechanical stresses caused by a low temperature resulting from (1) gas decompression in the tank during driving as the gas is depleted from the tank and (2) environmental exposure of the tanks in low temperature climate conditions are minimized. The present invention provides a warming device installed around a tank port thermally interconnected with a seamless metal liner to conduct heat, derived from an on board vehicle heat source, from the tank port to the tank interior. Heating ameliorates mechanical stresses to the tank and the component parts of the tank caused by the thermal conditions of the tank environment and thermal changes in gas temperature associated with the depletion of high pressure gas from the tanks.

### BACKGROUND OF THE INVENTION

Vehicles powered by compressed natural gas (CNGV) and hydrogen gas (FCV) typically include on board high pressure gas fuel tanks. In variations, the tanks may include gas absorbing materials within the tank interior. During driving, the gas inside the tanks becomes cold, caused by the decrease in tank pressure (or decompression) as gas is consumed by the vehicle power plant. Gas absorbing materials used in the tank interior will absorb the intrinsic heat in the gas during the gas discharge from the tank during vehicle operation. In cold climates, internal gas temperature in the tank can drop to -60°C or below, a temperature that may be below the permissible operating temperature of O-rings, rubber or polymer seals, or gas flow controls associated with the tank assembly. An excessively low temperature in the tank may upset design tolerance limits for the seals and flow controls and cause the stored gas to leak as a result of temperature caused stresses in the tank system assembly.

As an example, when the ambient temperature is -20°C, the reduction of internal tank temperature by an additional -40° C due to gas decompression will result in an internal temperature in the gas tank of -60°C or lower. Expansion and contraction of the tank and the component parts of the gas flow system associated with the tank may produce adverse mechanical stress effects. In the specification, reference to hydrogen fuel cell vehicles correlates with the use of the invention with CNGV's (compressed natural gas (CNG) powered vehicles), hydrogen powered fuel cell vehicles (FCV's), and internal combustion engine vehicles powered by either CNG or hydrogen. Although hydrogen is typically referred to in the specification and examples, "hydrogen" is a term, in most instances, intended to be interchangeable with CNG and other fuel gases.

Closest prior art Published United States Patent Application No. US 2007/012551 A1 discloses a tank for storing a compressed gas in accordance with preamble of claim 1.

### OBJECTS OF THE INVENTION

It is an object of the present invention to provide a warming system for an on board resin/fiber composite tank having a metal liner. The invention provides a warming device installed proximate the tank port thermally interconnected with a seamless metal liner to conduct heat from the tank port to the tank interior. The risk of a fuel gas leak in cold climate driving conditions caused by excessively low tank and/or gas temperatures is reduced, and, as a result, tank durability is increased because temperature variances between tank assembly components are minimized.

The invention is described more fully in the following description of the preferred embodiment considered in view of the drawings in which:

### BRIEF DESCRIPTION OF THE SEVERAL VIEWS OF THE DRAWINGS

Figure 1 is a cut away view showing a typical cylindrical high pressure gas storage tank formed from a carbon fiber resin composite material including a tank liner.

Figure 2 is a chart of gas and valve temperatures of the tank plotted against a time axis depicting relative temperatures of the gas within the tank and valve components associated with the tank assembly during the vehicle conditions of driving and parking. The cooling of the metal components after driving is shown wherein valve temperatures are below the lower tolerance limit after driving.

Figure 3 is a longitudinal side sectional view of a tank and warming system of the invention wherein an electrically powered warming device is thermally interconnected with a metal boss component at the tank end to provide heating for the gas and tank through the tank liner.

Figure 4 is a longitudinal cross section plan view from the boss end of the tank through the central section of the tank of Figure 3 shown at **4** → ← **4**.

Figure 5 is a side view of the warming element surrounding the tank boss of Figure 3 shown at **5** → ← **5** showing electrical coil windings.

Figure 6 is a side view of a warming system of the invention wherein a heating fluid circulates within a coil conduit for fluid flow in the metal boss warming element at the tank end to provide heating for the gas and tank.

Figure 7 shows an example of a fluid conduit circuit interconnection of the boss warming element with heat sources in the vehicle cooling system.

Figure 8 is a schematic diagram showing various heat sources with which the warming coil may be interconnected.

Figure 9 illustrates a power control system for electrical energy input and/or fluid circulation that may be utilized in the invention to monitor tank temperature and to control power or fluid input to the warming coil in accordance with a regulation protocol.

### DETAILED DESCRIPTION OF THE INVENTION

The invention provides a warming system for high pressure gas storage tanks utilized on high pressure gas fueled vehicles including vehicles powered by compressed natural gas (CNG), and fuel cell and internal combustion engines powered by hydrogen gas. During driving, gas stored in the tank cools because a decrease in the tank pressure occurs as the gas is consumed. When a vehicle tank includes gas absorbing materials, the gas absorbing materials absorb heat during the gas discharge from the tank further contributing to the cooling effect.

Environmentally, a typical ambient temperature is approximately 20° C. In cold climates, the internal gas temperature in a vehicle tank can drop to -60° C or below, a temperature that may exceed the lower permissible operating temperature range of O-rings, rubber or polymer seals used in the tank, and the component parts of the port inlet and outlet metal assemblies that control the inflow and outflow of gas to and from the storage tank. Below the acceptable temperature range, when allowable variances for seals, valves, control devices, and the like, are exceeded by thermally caused mechanical variations in the tank and associated assemblies, leakage of the stored gas may result. The invention warms the storage tank utilizing a metal tank liner thermally interconnected with a warming device installed around the tank boss. The seamless metal liner conducts heat from the tank boss to tank interior. The risk of a fuel gas leak in cold climate driving conditions is reduced and tank durability is increased because the internal temperature variations between the stored gas and the tank's wall are smaller.

In providing a heating system for an on board high pressure storage tank for a vehicle fuel gas the invention comprises a carbon fiber resin composite shell defining a fixed volume for the storage of the high pressure gas having a seamless thermally conductive metal liner disposed within the composite shell. A section of the metal liner extends outward from the tank exterior and forms a section of the tank boss. A warming ring is disposed around the perimeter of the outward extending liner section. The ring includes, embedded therein, a coil in which heating energy from a source on board the vehicle is circulated and the heating energy so received by the coil is transmitted by conduction to the interior liner of the tank. Thus, the tank and components associated with the gas flow assembly of the tank are warmed such that temperature of the tank and components does not drop below the lower acceptable limit of temperature tolerance for the tank and components. The coil may be formed from a winding of an electrically conductive wire adapted to receive an electric current or a conduit adapted to receive the circulating flow of a heat exchange fluid.

When a fluid is employed to heat the ring, the fluid conduit includes an inlet and an outlet at the beginning and end of the coil that are operatively interconnected with a heat source associated with a vehicle system. Whether the ring is heated electrically or by a fluid, a temperature power control system may be used to monitor and regulate temperature. The control system includes temperature sensors to provide temperature measurement data input into the control system for one or more of valve temperature, tank wall temperature, gas temperature and ambient temperature and a processor control for the system temperature. The processor monitors the temperatures sensed and determines the flow of electric current or fluid into the coil such that temperature of the tank and components does not drop below the lower acceptable limit of temperature tolerance for the tank and components. Other heat sources mat include a chemical or physical reaction, refueling gas burning, a metal hydrate material or the like.

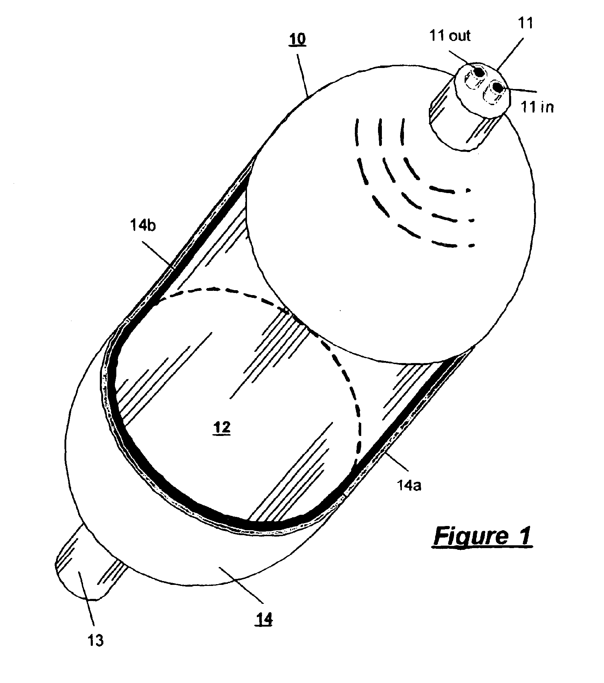

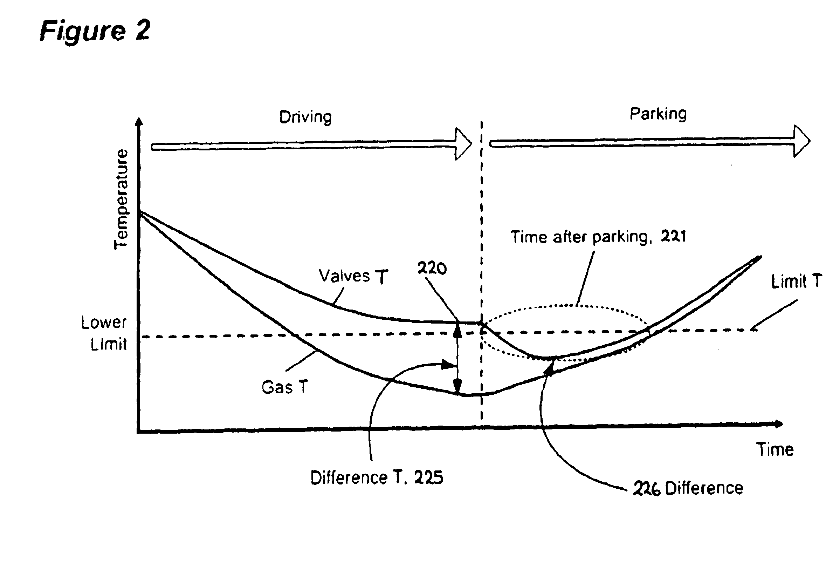

With reference to Figure 1, high pressure tanks are typically cylindrical with semi spherically shaped domed ends and are formed from a carbon fiber resin composite shell. Figure 1 shows a typical high pressure gas storage tank 10 having an interior volume 12 for the storage of gas. The tank includes sidewall 14, including a first boss 11 and second boss 13 at opposing ends. A gas inlet and a gas outlet are shown at boss 11 as 11 in and 11 out. The resin composite shell is indicated at 14a. The metal liner utilized in the invention is shown at 14b. Driving and parking temperature conditions in the vehicle tank system are charted in Figure 2. As discussed above, during driving, the gas temperature may exceed the lower tolerance limit T of the tank and metal components by the temperature difference shown as 225. In a typical parking condition, Figure 2 illustrates that with time, the temperature 220 of the valve system cools to a difference 226 such that, in the period shortly after parking 221, the valve temperature 220 cools below the lower acceptable limit T of temperature tolerance.

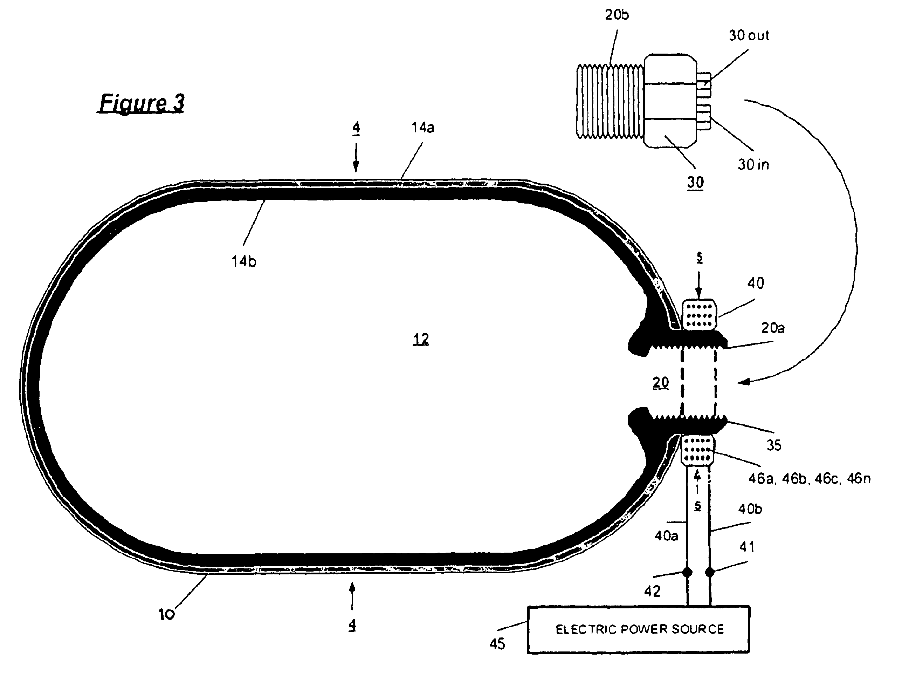

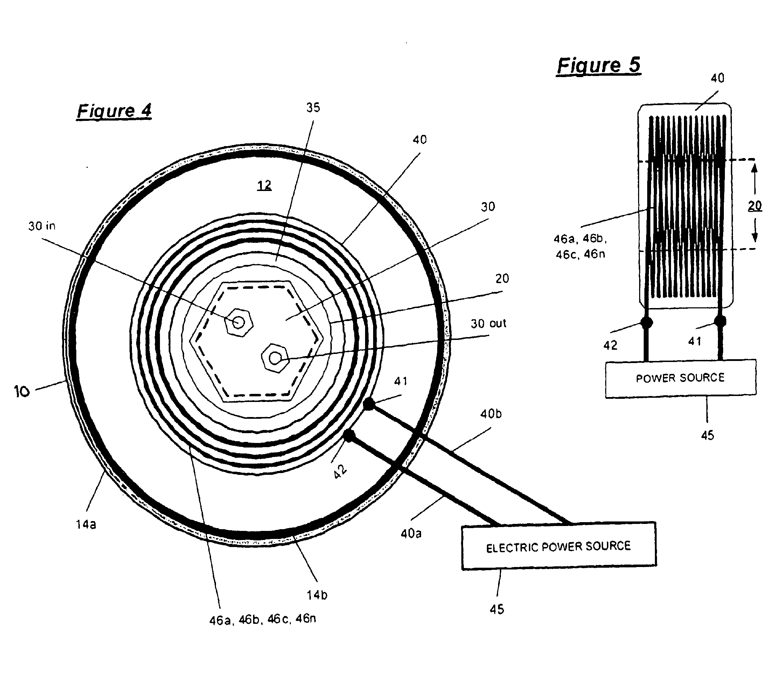

Figure 3 depicts component parts of an example of a heating system: tank 10, resin composite shell 14a and metal liner 14b, interior volume for gas storage 12, boss 30, and gas flow conduits: external inlet conduit 30 in and external outlet conduit 30 out for depletion of gas during driving. Gas flow conduits are embedded in the boss and the boss may also have embedded therein (not shown) check valves, a pressure regulator and control valves in each of 30 in and 30 out. One element of the boss 30 is threaded with external threads 20b that correspondingly engage with internal threads 20a that are intrinsically formed in or with a section of the metal liner 14b that extends outward to the tank exterior to receive the boss element. In the example of Figure 3, an electric warming system is circumferentially disposed around the extending exterior segment 35 of the liner 14b. Boss 30 fits into liner opening 20. The warming system comprises an electrical coil wound circumferentially around a ring sized to fit circumferentially around the boss exterior. The coil end wires 40a and 40b are connected to terminals 41 and 42 that are in turn connected to an electrical power source 45 providing a flow of warming current to the warming coil. Figure 4 is a top plan view of the warming system of the invention showing the coil windings, 46a, 46b, 46c, 46n embedded in the ring 40 surrounding the extending boss segment 35. The boss electrodes 41 and 43 are connected to terminals 42 and 44 that are in turn connected to electrical power source 45 providing a flow of warming current to the conductive shell. Figure 5 is a side view of the warming coil showing the coil windings, 46a, 46b, 46c, 46n embedded in the ring.

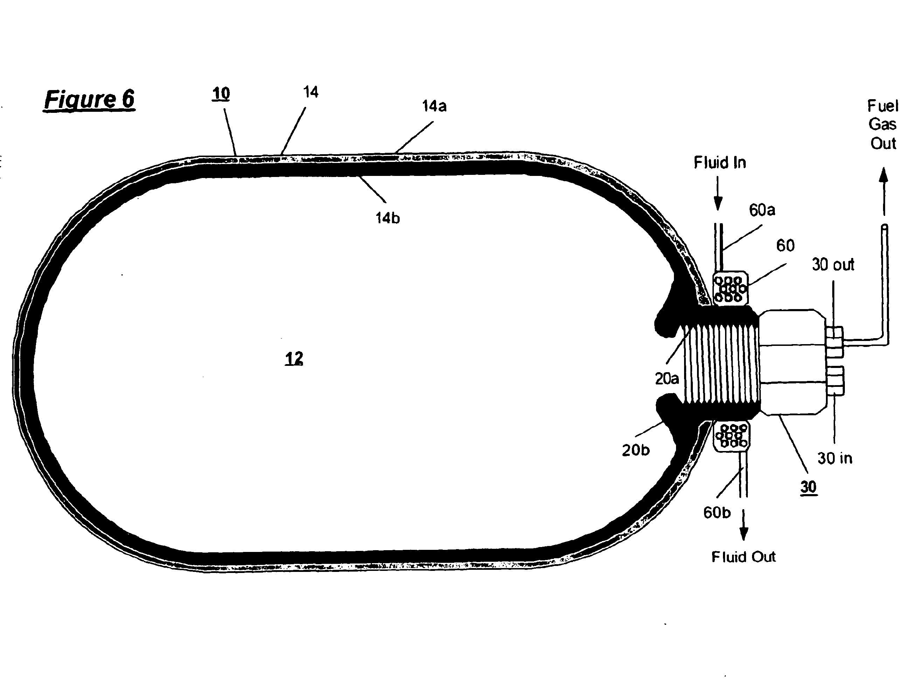

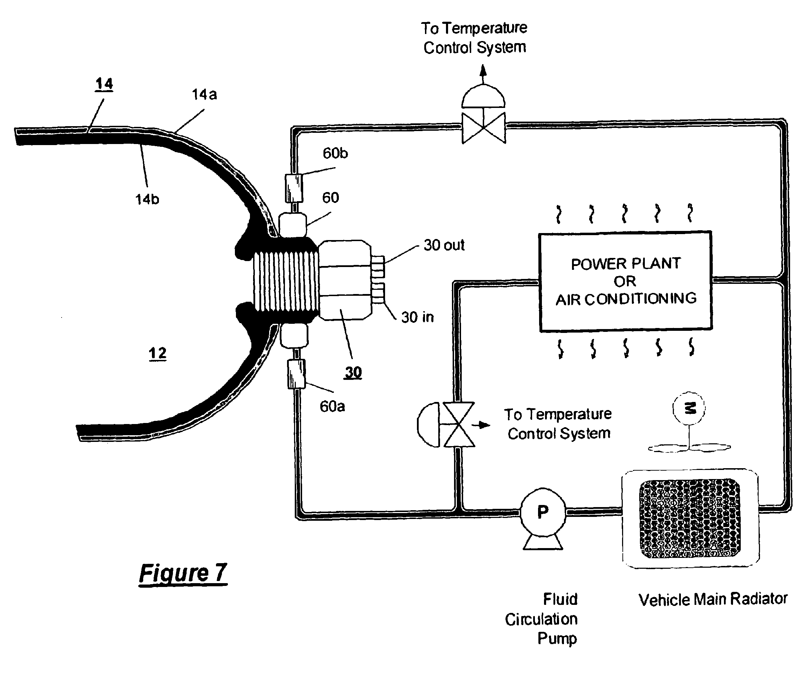

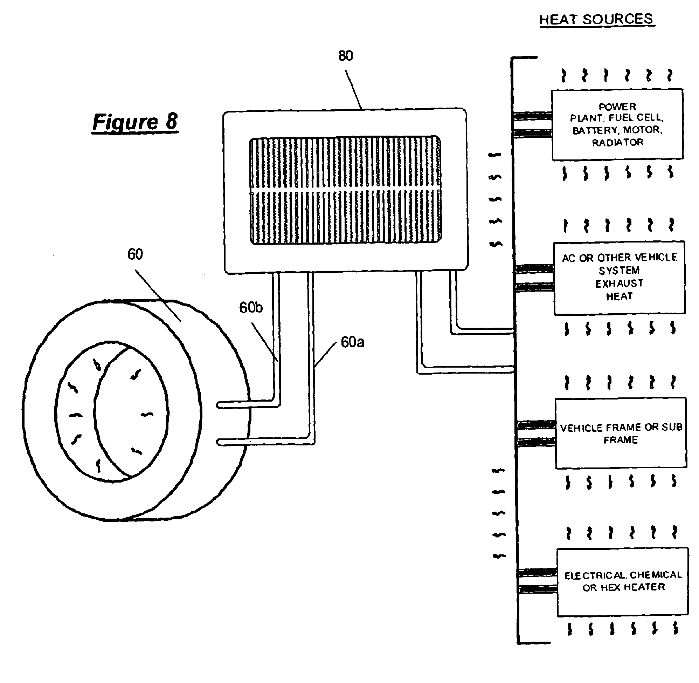

Figure 6 is a side view of a warming system of the invention including a fluid circulation system in the ring 60 surrounding the exterior segment of the liner 14b. Fluid in 60a and fluid out 60b conduits are disposed within the ring essentially corresponding to the wire windings shown in Figure 3, Figure 4 and Figure 5. An interconnection of fluid conduits 60a and 60b with a heating source from the vehicle power plant or air conditioning system is shown in Figure 7. Figure 8 is a chart showing various heat sources within the vehicle systems with which the warming coil may be interconnected.

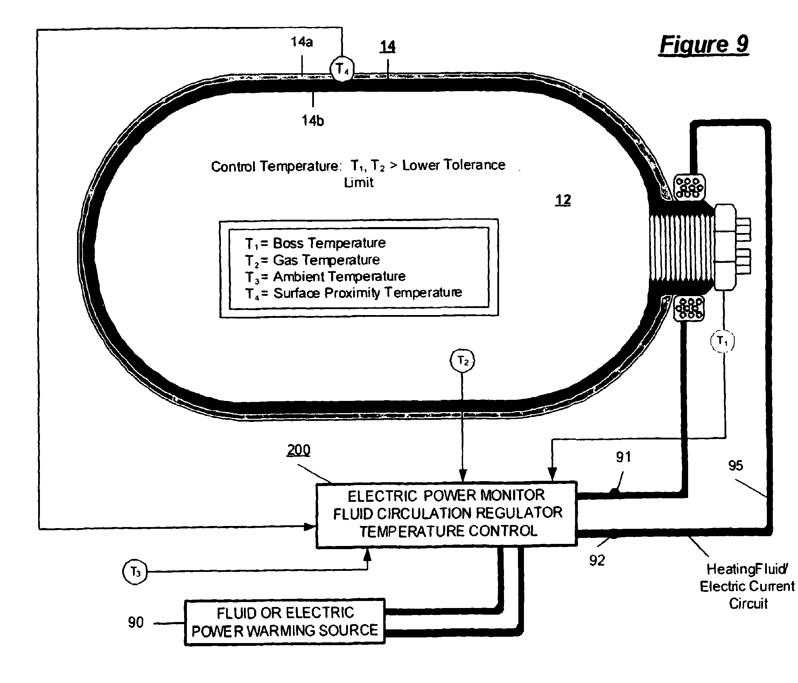

Figure 9 illustrates a power control system for electrical energy input and/or fluid circulation that may be utilized in the invention to monitor tank temperature and to control power or fluid input to the warming coil in accordance with a regulation protocol. The temperature control system may be utilized for overall temperature monitoring and regulation of the tank and gas flow components. In the example in Figure 9, sensors measure T₁ = Boss Temperature; T₂ = Gas Temperature; T₃ = Ambient Temperature; and T₄ = Surface Proximity Temperature. The sensed temperatures are input into the control system 200 regulating overall gas and tank temperature such that the Control Temperature, generated by the warming system, as regulated by the control processor 200 for fluid flow and/or electric power input (as applicable) is: T₁, T₂ > Lower Tolerance Limit of the tank and valve components. Control processor 200 regulates the energy flow from the warming power source 90 input into the control system circuit 95, which may be either an electrical system or a fluid system, interconnected to the warming ring through input connectors 91 and 92. With reference to Figure 2 showing temperatures in various operating modes, the control system 200 will warm the system such that the differentials shown as 25 and 26 are eliminated and the lower tolerance limit of the system is not exceeded.

### INDUSTRIAL APPLICABILITY

High pressure CNG or hydrogen gas fueled vehicles powered by engines or fuel cells require an extended driving range, achieved by increasing the quantity of fuel stored in an on board tank. As the quantity of fuel stored is increased, pressure of gas within the tank likewise increases. Temperature fluctuations occur inside and outside on board tanks, that, along with pressure variations occurring during tank refill and depletion and cause mechanical stress in the tank system as a result of the expansion and contraction of the physical components that comprise the tank and any *in situ* thermal management (heat exchanger) and/or gas flow devices (valves and regulators) that may be installed therein. The decompression of gas as a tank is depleted lowers temperature and produces stress. Additionally, cold temperature, by itself, may induce internal or external leaks. The thermal warming and temperature control system described and claimed is useful to promote gas flow and relieve stresses induced within the tank by the effects of gas heating during refill, gas cooling during tank depletion, and environmental temperature fluctuations. The invention enhances the integrity and durability of the tank system assembly and the gas flow control system associated with the tank assembly.

## Claims

1. A heating system for an on board high pressure storage tank (10) for a vehicle fuel gas comprising:
a carbon fiber resin composite shell (14a) defining a fixed volume (12) for the storage of the high pressure gas; a seamless thermally conductive metal liner (14b) disposed within the composite shell; a section of the metal liner extending outward from the tank exterior and forming a section of a tank boss (30);
**characterised in that**:
the outward extending section of the liner has disposed around the perimeter thereof a warming ring (40, 60); the ring including, embedded therein, a coil for the reception of heating energy from a source on board the vehicle; the heating energy being transmittable by conduction to the interior liner of the tank for preventing the temperature of the tank and components associated with gas flow into and from the tank from falling below the lower acceptable limit of temperature tolerance for the tank and components.

2. The heating system of claim 1 wherein the coil is formed from a winding (46a, 46b, 46c, 46n) of an electrically conductive wire (40a, 40b) adapted to receive an electric current.

3. The heating system of claim 1 wherein the coil is a conduit (60a, 60b) adapted to receive the circulating flow of a heat exchange fluid.

4. The heating system of claim 3 wherein the fluid conduit includes an inlet (60a) and an outlet (60b) at the beginning and end of the coil and the inlet and outlet are operatively interconnected with a heat source associated with a vehicle system.

5. The system of claim 2 including a temperature power control system including a) temperature sensors (T1, T2, T3, T4) to provide temperature measurement data input into the control system for one or more of valve temperature, tank wall temperature, gas temperature and ambient temperature and b) a processor control (200) for the system temperature, the processor monitoring the temperatures sensed and determining the flow of electric current into the coil for preventing the temperature of the tank (10) and components from falling below the lower acceptable limit of temperature tolerance for the tank and components.

6. The system of claim 4 including a temperature power control system including a) temperature sensors (T1, T2, T3, T4) to provide temperature measurement data input into the control system for one or more of valve temperature, tank wall temperature, gas temperature and ambient temperature and b) a processor control (200) for the system temperature, the processor monitoring the temperatures sensed and determining the flow of heat exchange fluid into the coil for preventing the temperature of the tank (10) and components from falling below the lower acceptable limit of temperature tolerance for the tank and components.

7. The heating system of claim 1 wherein the metal liner (14b) is formed from one or more of aluminum, copper, nickel, silver, stainless steel, and titanium (Al, Cu, Ni, Ag, SUS, and Ti) or alloys thereof.

8. The heating system of claim 4 wherein the heat source associated with the vehicle system includes a heat source from one or more of the vehicle power plant, a fuel cell, battery, motor, radiator, or air conditioning vehicle system, the vehicle exhaust, heat from the vehicle frame or a vehicle sub frame assembly, and an electrical, chemical or heat exchanger source.

9. The heating system of claim 1 wherein a heat source for the warming coil comprises at least one of a chemical or physical reaction, refueling gas burning, a metal hydrate material or the like.

## Patentansprüche

1. Heizsystem für einen Bord-Hochdruckspeichertank (10) für ein Fahrzeug-Kraftstoffgas mit
einem Kohlenstofffaser-Kunstharz-Verbundgehäuse (14a), das ein festes Volumen (12) zur Speicherung des Hochdruckgases definiert und einer innerhalb des Verbundgehäuses angeordneten nahtlosen wärmeleitenden Metallauskleidung, wobei ein Teil der Metallauskleidung von der Außenseite des Tanks nach außen verläuft und einen Teil eines Tankansatzes (30) bildet,
**dadurch gekennzeichnet, dass** der nach außen verlaufende Teil der Auskleidung an seinem Umfang von einem Erwärmungsring (40, 60) umgeben ist, in den eine Spule zur Aufnahme von Heizenergie von einer an Bord des Fahrzeugs befindlichen Quelle eingebettet ist, wobei die Heizenergie durch Leitung in die innere Auskleidung des Tanks übertragbar ist, um zu verhindern, dass die Temperatur von Tank und mit der Gasströmung in und aus dem Tank zusammenhängenden Bauteilen unter die untere annehmbare Temperaturtoleranzgrenze für den Tank und die Bauteile fällt.

2. Heizsystem nach Anspruch 1, wobei die Spule aus einer Wicklung (46a, 46b, 46c, 46n) aus einem elektrisch leitenden Draht (40a, 40b) zur Aufnahme von elektrischem Strom besteht.

3. Heizsystem nach Anspruch 1, wobei die Spule eine Leitung (60a, 60b) zur Aufnahme der Zirkulationsströmung eines Wärmetauscherfluids ist.

4. Heizsystem nach Anspruch 3, wobei die Fluidleitung am Anfang und am Ende der Spule einen Einlass (60a) und einen Auslass (60b) aufweist, die mit einer einem Fahrzeugsystem zugeordneten Heizquelle wirkungsmäßig verbunden sind.

5. System nach Anspruch 2, mit einem Temperatur-Leistungssteuersystem, das aufweist:
a) Temperaturfühler (T1, T2, T3, T4) zur Erzeugung von Temperaturmessdaten, die in ein Steuersystem für Ventiltemperatur, Tankwandtemperatur, Gastemperatur und/oder Umgebungstemperatur eingegeben werden, und
b) eine Prozessorsteuerung (200) für die Systemtemperatur, wobei der Prozessor die gemessenen Temperaturen überwacht und die Strömung von elektrischem Strom in die Spule bestimmt, um zu verhindern, dass die Temperatur des Tanks (10) und der Bauteile unter die untere annehmbare Temperaturtoleranzgrenze für den Tank und die Bauteile fällt.

6. System nach Anspruch 4 mit einem Temperaturenergie-Steuersystem, das aufweist:
a) Temperaturfühler (T1, T2, T3, T4) zur Erzeugung von Temperaturmessdaten, die in das Steuersystem für Ventiltemperatur, Tankwandtemperatur, Gastemperatur und/oder Umgebungstemperatur eingegeben werden, und
b) eine Prozessorsteuerung (200) für die Systemtemperatur, wobei der Prozessor die gemessenen Temperaturen überwacht und die Strömung von Wärmetauscherfluid in die Spule bestimmt, um zu verhindern, dass die Temperatur des Tanks (10) und der Bauteile unter die untere annehmbare Temperaturtoleranzgrenze für den Tank und die Bauteile fällt.

7. Heizsystem nach Anspruch 1, wobei die Metallauskleidung (14b) aus einem oder mehreren der Materialien Aluminium, Kupfer, Nickel, Silber, rostfreier Strahl und Titan (Al, Cu, Ni, Ag, SUS und Ti) oder Legierungen daraus besteht.

8. Heizsystem nach Anspruch 4, wobei die dem Fahrzeugsystem zugeordnete Wärmequelle die Fahrzeugkraftanlage, eine Brennstoffzelle, eine Batterie, den Motor, den Kühler oder eine Fahrzeugklimaanlage, das Fahrzeugabgas, Wärme aus dem Fahrzeugrahmen oder einer Fahrzeugrahmen-Untergruppe und/Oder eine elektrische, chemische oder Wärmetauscherquelle beinhaltet.

9. Heizsystem nach Anspruch 1, wobei die Wärmequelle zur Erwärmung der Spule eine chemische oder physikalische Reaktion, die Verbrennung von Kraftstoffgas und/oder ein Metallhydratmaterial oder dergleichen beinhaltet.

## Revendications

1. Système de chauffage, pour un réservoir de stockage sous haute pression (10) embarqué pour un carburant gazeux pour véhicule, comprenant :
une enveloppe (14a) en composite résine-fibres de carbone, définissant un volume (12) fixe pour le stockage de gaz sous haute pression ; un revêtement métallique (14b) conducteur de la chaleur, sans joint, disposé à l'intérieur de l'enveloppe en composite ; une section du revêtement métallique s'étendant vers l'extérieur à partir de l'extérieur du réservoir et formant une section d'une protubérance de réservoir (30) ;
**caractérisé en ce que** :
la section, s'étendant vers l'extérieur, du revêtement comprend un anneau de chauffage (40, 60) disposé autour de son périmètre ; l'anneau comprenant, intégré en son sein, un serpentin bobiné pour la réception d'énergie de chauffage provenant d'une source embarquée sur le véhicule ; l'énergie de chauffage étant transmissible par conduction au revêtement intérieur du réservoir, pour empêcher que la température du réservoir et des composants associés à l'écoulement de gaz entrant et sortant du réservoir ne chute au-dessous de la limite de tolérance de température inférieure acceptable pour le réservoir et les composants.

2. Système de chauffage selon la revendication 1, dans lequel le serpentin bobiné est formé d'un enroulement (46a, 46b, 46c, 46n) d'un fil métallique (40a, 40b) conducteur de l'électricité, adapté pour recevoir un courant électrique.

3. Système de chauffage selon la revendication 1, dans lequel le serpentin bobiné est un conduit (60a, 60b) adapté pour recevoir l'écoulement circulant d'un fluide d'échange de chaleur.

4. Système de chauffage selon la revendication 3, dans lequel le conduit de fluide comprend une entrée (60a) et une sortie (60b), au début et à la fm du serpentin bobiné, et l'entrée et la sortie sont interconnectées fonctionnellement à une source de chaleur associée à un système pour véhicule.

5. Système de chauffage selon la revendication 2, comprenant un système de commande d'énergie de régulation de la température incluant a) des capteurs de température (T1, T2, T3, T4) pour fournir des données de mesure de température, introduites dans le système de commande pour une ou plusieurs température de soupape, température de paroi de réservoir, température de gaz et température ambiante et b) une commande à processeur (200) pour la température système, le processeur surveillant les températures appréhendées et déterminant le flux de courant électrique dans le serpentin bobiné, pour empêcher que la température du réservoir (10) et des composants ne chute au-dessous de la limite de tolérance de température inférieure acceptable pour le réservoir et les composants.

6. Système de chauffage selon la revendication 4, comprenant un système de commande d'énergie de régulation de la température incluant a) des capteurs de température (T1, T2, T3, T4) pour fournir des données de mesure de température, introduites dans le système de commande pour une ou plusieurs température de soupape, température de paroi de réservoir, température de gaz et température ambiante et b) une commande à processeur (200) pour la température système, le processeur surveillant les températures appréhendées et déterminant le flux de chaleur dans le serpentin bobiné, pour empêcher que la température du réservoir (10) et des composants ne chute au-dessous de la limite de tolérance de température inférieure acceptable pour le réservoir et les composants.

7. Système de chauffage selon la revendication 1, dans lequel le revêtement métallique (14b) est formé d'un ou plusieurs constituants, parmi l'aluminium, cuivre, nickel, argent, acier inoxydable et titane (Al, Cu, Ni, Ag, SUS et Ti) ou leurs alliages.

8. Système de chauffage selon la revendication 4, dans lequel la source de chaleur associée au système pour véhicule comprend une source de chaleur parmi une ou plusieurs d'une installation de propulsion pour véhicule, une pile à combustible, une batterie, un moteur, un radiateur, ou un système de conditionnement d'air pour véhicule, l'échappement de véhicule, la chaleur provenant du châssis de véhicule ou d'un ensemble de sous-châssis de véhicule, et une source de nature électrique, chimique ou constituée par un échangeur de chaleur.

9. Système de chauffage selon la revendication 1, dans lequel une source de chaleur pour le serpentin bobiné de chauffage comprend au moins au moins l'une d'une réaction chimique ou physique, une combustion de gaz de rechargement, un matériau de type hydrate métallique, ou analogue.
